# EUROPEAN PATENT SPECIFICATION

(11) **EP 0 820 788 B1**
(45) Date of publication and mention of the grant of the patent: **07.05.2003**
(21) Application number: 96119842.1
(22) Date of filing: 09.12.1996
(51) Int. Cl.: A63B 69/00, A63B 71/06

(54) **System and method for confirming and correcting offensive and/or defensive postures in a team ball game**
System und Verfahren zur Feststellung und Korrektur offensiver und/oder defensiver Körperhaltungen in einem Mannschaftsballspiel
Système et méthode pour confirmer et corriger des postures offensives et/ou défensives dans un jeu de balle collectif

(30) Priority: 27.05.1996 JP 17077696
(43) Date of publication of application: 28.01.1998
(73) Proprietor: K.K. Asobou's, 160 Tokyo (JP)
(72) Inventor: Katayama, Muneomi, Tokyo 160 (JP)
(74) Representative: Kirschner, Klaus Dieter, Dipl.-Phys.

(56) References cited:
- WO-A-95/10337
- CH-A- 628 192
- FR-A- 2 726 370
- US-A- 3 701 946
- US-A- 5 184 295
- US-A- 5 283 733

## Description

### BACKGROUND OF THE INVENTION

### 1. Field of Industrial Application

This invention relates to a method and a system for confirming and correcting an offensive and/or a defensive posture in a team ball game wherein a ball or similar materials in soccer, American football, basketball, rugby, volleyball, hockey and the like are employed.

### 2. Prior Art

As described above, it is not too much to say that victory or defeat in a team ball game is often decided based upon the use of a particular offensive and/or defensive formation composed of all the players in a team at a key point during the game. In other words, it becomes a key to the score to prepare a formation against that of the other party as a result of seeing promptly through the formation on the other side, *i.e*., the defensive formation when one is on the offensive side, and the offensive formation when on the defensive side.

Under such circumstances, it was heretofore common for the manager or leader of one of the opposing teams to call a meeting so as to confirm the use of an offensive and/or defensive formation. Specifically, such meetings are typically composed of discussions as, for example, on a defensive side, "if the offensive side uses, for example, the offensive formation of pattern A, we will oppose to it by using the defensive formation of pattern A; if the offensive side takes an offensive formation of pattern B, we will take the defensive formation of pattern B."

Typically, such meetings may be carried out using, for example, "blue" magnetic tips representing players on an offensive side and "red" magnetic tips representing players on a defensive side to illustrate either a certain offensive or defensive pattern with the tips being positioned on a steel board, in conjunction with discussion in the meeting.

However, there are an infinite variety of offensive and defensive formations of a team which may be suitably changed depending upon the type of game, the teams opposing one-another, the progress of a game and the like, so that such formations are not unitary.

In this regard, one way of improving the above conventional system is to adopt a video image system as a better means for grasping, recording, and analyzing the changes in offensive and/or defensive patterns of a certain team. Furthermore, recorded video images may be used to comparatively examine the changed pattern of an opposing team with a pattern of one's own team.

U.S. Patent No. 5,184,295 (issued on February 2, 1993) discloses that model acting and the like have previously been recorded as video images, and these model acting video images are overlapped with an acting video image of a person who is to be coached by means of arithmetic processing or the like to obtain a stereoscopic video image, whereby a suitable coaching is conducted.

While this prior invention is suitable for sports or activities which proceed in comparatively "slow" pace as compared with the other sports, *e.g*., golf play, grasping and analyzing offensive/defensive patterns in team sports were substantially impossible to achieve, particularly in violent sports such as soccer and rugby.

Typically, over time, teams will change formation patterns, both offensive and/or defensive patterns, that are peculiar to or inherent in their team, and particularly with teams in violent sports like soccer.

From CH-628 192 A a video system for monitoring a team game is known. A video camera films the game, and a second video camera films a reference field to find out the coordinates of the players.

According to W095/10337 Al a method for detecting offside situations in football is disclosed. The position of each player on the pitch is detected. A triggering signal is emitted when an offside situation occurs.

FR 2726370 Al discloses a system to control the position of a ball and of the players in a team game.

The US-A-5 283 733 shows a computer on-line golf scoring device in which a keypad is provided having one or more keys for entering predetermined types of data. The keypad is operatively connected to the display means and may be used for requesting scoring information.

The method and the system of the present invention are directed to making possible to easily see through offensive and defensive patterns of an opposing team wherein offensive and defensive postures of the opposing team can be easily grasped and easily analyzed and wherein comfortable means should be provided for inputting specific data..

To this end, a system and a method for analyzing offensive and defensive patterns of teams in team sports is provided as claimed in claims 1 and 10 respectively. Advantageous embodiments of the invention are contained in the sub-claims.

In the present invention, details of all or part of a game, as needed, are recorded by means of a video camera to grasp offensive and defensive patterns of the opposing team as described above, while required data or information on the game is synchronously inputted to a personal computer with the video images recorded by the aforesaid video camera. When entry of information into the personal computer at the time of scoring a point is intended after finishing the game, the video images at that time can be simultaneously outputted with the information entry, whereby the formations as well as offensive and defensive patterns of both teams team can be grasped and analyzed. For example, in the case of soccer, when a miss in passing a ball results in one losing a point, information on the offensive and defensive patterns at the instance of the miss described above may be obtained for analysis.

Furthermore the basic offensive and/or defensive patterns under a certain period of time or certain conditions can be outputted on the display of a personal computer (PC) together with a variety of information and data entered via the keyboard of the PC or other input devices into the PC, whereby any of the basic patterns can be compared with a pattern from an actual game taking place by viewing the patterns either side by side, or in an overlapped manner.

In addition to the above, the basic patterns in the form of video images stored in the personal computer as well as video images of an actual pattern recorded through a videocassette recorder system are not outputted as still-frame images, but as moving video images so that differences in motion between the patterns can be identified and analyzed.

Furthermore, in the situation where an offensive pattern of the opposing team used against a particular defensive pattern of one's own team resulted in the opposing team scoring, the simultaneous comparison of the two patterns may be used to identify and correct the deficiencies in the defensive pattern in countering the opposing team's use of that particular offensive pattern in the future. Therefore, such deficiencies as missing a ball that was passed between players, and missing a ball that was being shot in a goal scoring attempt, such as in soccer or other similar games, can be corrected.

Another advantage resides in that one can identify and understand the flow of offensive and defensive patterns used by the opposing team during the entire game, whereby the resulting information may be utilized for planning and developing future defensive and offensive patterns for one's own team, as well as strategies for countering the opposing team's particular flow of offensive and defensive patterns.

Further, the present invention may be used to identify and analyze the characteristics of a particular player on the opposing team, such that countermeasures against patterns in which that particular player is used or actions/maneuvers for which that player is recognized as an expert may be developed. Accordingly, as described above, the present invention may be used to generate a considerable amount of information for developing and/or improving the offensive and defensive patterns of one's team that may in turn advantageously lead to greater success in competition.

### BRIEF DESCRIPTION OF THE DRAWINGS

Figure 1 illustrates a block layout diagram of the overall system of the present invention;
Figure 2 shows a general view of an example initial menu display of the present invention as implemented on a personal computer;
Figure 3 illustrates a block diagram showing the general system for entering information in accordance with the present invention; and
Figure 4 shows a general view of an example reentrant and output menu display of the present invention as implemented on a personal computer.

### DETAILED DESCRIPTION OF THE PREFERRED EMBODIMENT

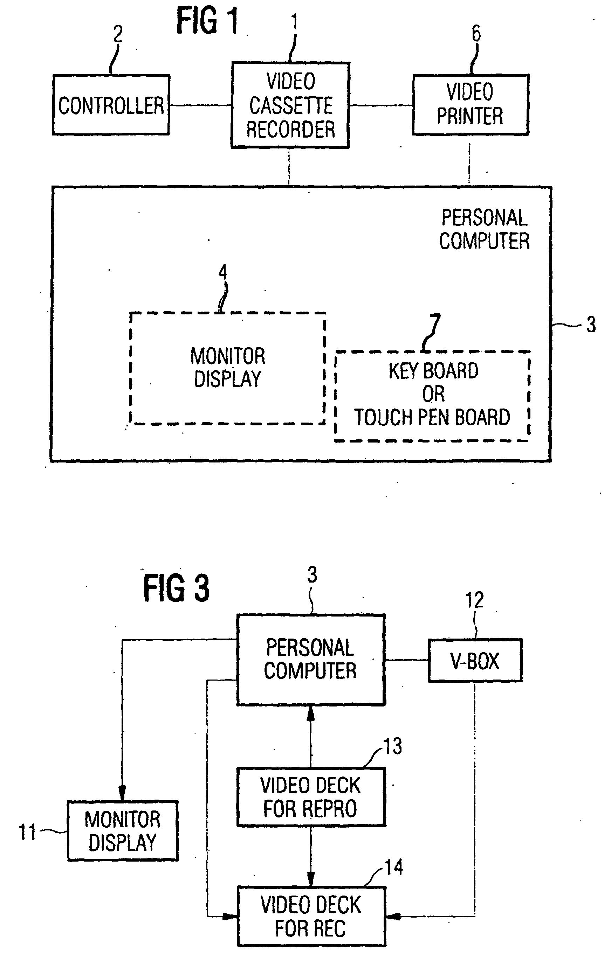

With reference to the figures, like reference characters will be used to indicate like elements throughout the several embodiments and views thereof. In particular, Fig. 1 is a block diagram showing the general system for implementing the present invention wherein reference numeral (1) designates a videocassette recorder containing a videotape. In this example, while an EVO-9650 videocassette recorder for Hi-8 videotape manufactured by Sony K.K. in Japan has been used in one embodiment of the present invention, any other videocassette recorder having equivalent performance as known in the art may, of course, be employed.

Reference numeral (2) designates a. controller which is attached to the videocassette recorder (1), whereby desired scenes are searched, and still-frame video images or moving video pictures are outputted on a display. Controliers as known in the art may be used for implementing the controller (2).

Reference numeral (3) designates a personal computer for controlling and processing data either stored therein or inputted thereinto. In the present example, while PC-9801FA personal computer manufactured by Nihon Denki K.K. has been used in one embodiment of the present invention, it is to be noted that the personal computer (3) is not limited thereto, but any other personal computer device known in the art having equivalent performance may be employed. In addition, other computer or data processing devices as known in the art, *i*.*e*., laptop computers, minicomputers, mainframe computers, etc. may also be used in implementing the present invention.

Furthermore, reference numeral (6) denotes a video image printer by which a video image can be printed in hard copy. It is, however, not required to provide the printer in the case where no such hard copy is necessary. Otherwise, the video image printer (6) may be implemented using any printer device that is capable of interfacing with a computer and/or with a video cassette recorder as known in the art.

Reference numeral (7) designates an input device connected to the personal computer (3), such as a keyboard. Alternatively, the input device (7) may be implemented using a touch-panel operated by a touch-pen, a mouse or other similar device known in the art.

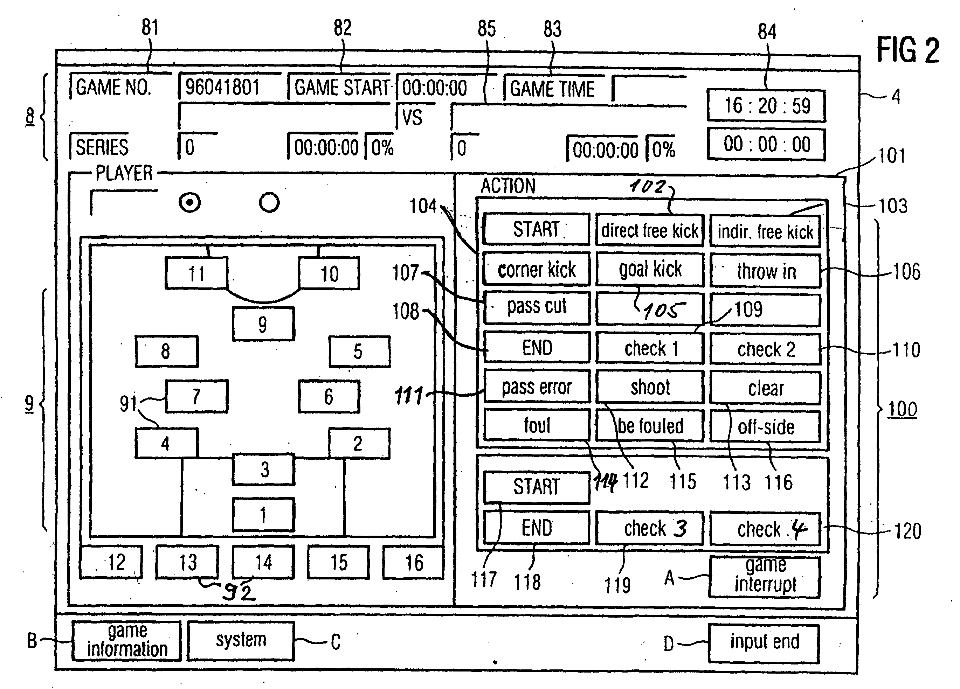

Fig. 2 illustrates an example initial menu screen shown on the monitor display (4) of the personal computer (3) where the present invention is applied to a soccer game.

The initial screen is the menu displayed when entering required information. In the example of a soccer game, the information to be entered includes a wide range of items from the start time of kickoff to the ending time of the game. In the initial screen, there is a group of required data displayed (8) on the upper part of the monitor display (4). The required data is shown at least in alphanumeric form and includes at least the data number of a game (81), a starting time of the game (82), a finishing time of the game (83), a timer (84), and the names of the teams playing (85).

A ground display (9) on one side of the monitor display shows the assigned positions (91) of the players 1 to 11 on the field. In this example, the ground (9) corresponds to a half of the actual soccer field, representing an area extending from the central position of the field to the goal position of one team with eleven players on one team displayed.

When a touch panel or mouse is used as the input device (7), the initial screen may also include a group display of dedicated entry keys (100) operating as a graphical interface for entering required information on the other side of the monitor display (4). These dedicated entry keys (100) are not limited to those illustrated in the figure, but they may be suitably selected or configured as required by the particular application.

The display as described above is configured so in order that the position and movement of various players 1 to 11 in a pattern to be graphically displayed is determined by the position of the ball as in the case of soccer or other similar games. Generally, during play the ball will always belong in either the side of the field controlled by one's own team or the opposing team. As such, displaying only one-half of the field is sufficient. However, displaying a representation of the entire field may also be done in order to accommodate a specific application or specific requirements thereof.

As noted above, reference numeral (91) refers to indicators of the ground (9) display corresponding to the positions of the players 1 to 11 with their respective names, which was previously inputted, displayed. Similarly, reference numeral (92) refers to indicators for reserve players (five members 12 to 16 in case of soccer) displayed on the lower part of the ground (9) display of the monitor screen. When one of those player indicators (91 or 92) is actuated via the input device (7), *i.e*., touched with a touch-pen or pointed to with a mouse, additional information on the correspond-ing player that was previously inputted will be displayed.

As described above, the dedicated entry key group display (100) may be configured or selected as required the particular and/or desired by the user. However, the entry key group display (100) should at least include the respective keys to allow the quick and efficient entry of such information as the start time of a game (101), occurrence of a direct free kick (102), occurrence of an indirect free kick (103), occurrence of a corner kick (104), occurrence of a goal kick (105), occurrence of a throw (106), occurrence of a cut in passing (107) and occurrence of the hike. In addition, respective keys for inputting additional information such as termination time of the game (108), check 1 (109) and check 2 (110) which will be described hereinafter, occurrence of a miss in passing (111), occurrence of a shot being taken (112), clear (113), occurrence of a foul play (114), being subjected to foul (115), and occurrence of an offside situation (116) should also be included.

The above-enumerated types of information defined for the individual entry keys in the group display (100) are designed primarily to input the corresponding data for one's own team. However, the respective keys in the group display (100) may also be defined for inputting information on the opposing team, such as entry keys for inputting at least a start time (117), a termination time (118), and check 3 (119) and check 4 (120).

As noted above, the group display (100) includes a start time of the game entry key (101). In operation, when a game begins play, the start entry key (101) displayed on the monitor display (4) is activated. Synchronous with that key entry, the starting time of the game display (82) is activated, and the above described videocassette recorder (1) begins recording video images of the game.

As the game progresses, as events such as direct free kicks, indirect free kicks, corner kicks, goal kicks, ball throws, or cuts in passing performed by one's own team occur, information on those events is entered using the appropriate entry keys (102) through (107). Furthermore, events such as misses in passing, shots, clear, actions in fouling, actions in being subjected to foul, occurrences of out-of-bounds and the like are also entered by means of the entry keys (111) through (116), as appropriate. The entry keys are used to mark and record at least the times when the specific events they designate occur.

The entry keys for check 1 (109) and check 2 (110) are spare entry keys for inputting other information to be monitored or recorded from the game as required by the particular application or as desired by the user. With respect to the opposing team, similar additional information may be inputted through the entry keys check 3 (119) and check 4 (120). For example, data on events of notable plays and the like involving particular players is entered using the entry keys check 3 (119) and a check 4 (120).

When the game ends, the recording by the videocassette recorder (1) stops, while the entry of information via the group display entry keys (100) is completed. As one may well appreciate, in fast-moving games such as soccer, entering all the data to be recorded into the PC (3) only while the game is still progressing is substantially impossible. However, other games such as golf that are far slower, the entry of relatively large amounts of data into the PC (3) is considerably easier. For this reason, the videocassette recorder (1) that recorded the game is provided. The videocassette recorder allows a user to enter additional information while viewing the recorded video images of the game long after the game itself has already ended.

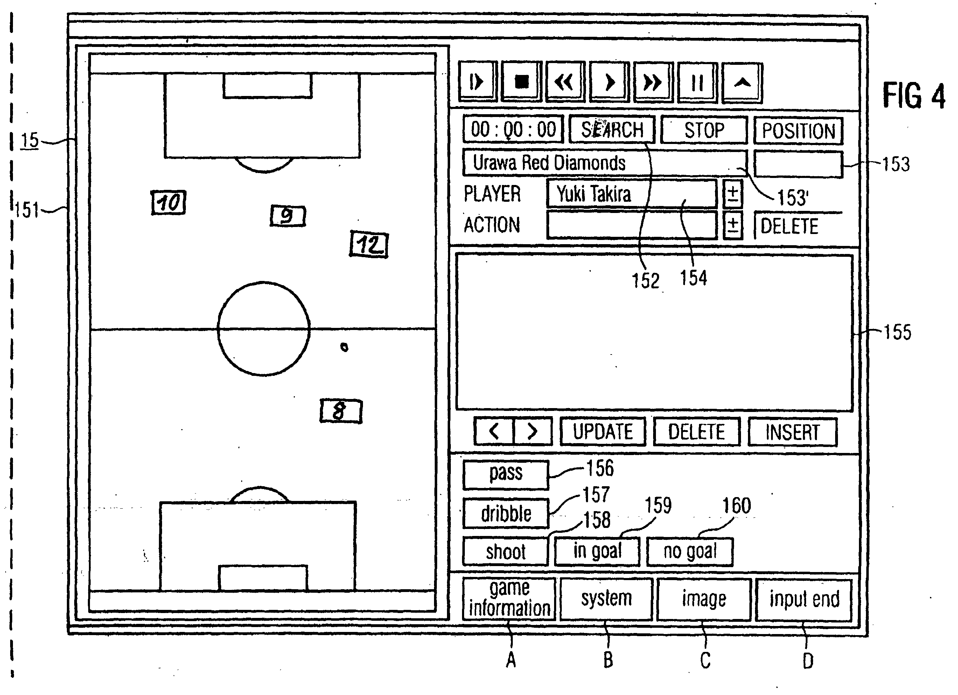

Fig. 3 is a block diagram showing an example of a reentrant system according to the present invention that is composed of the PC (3), another monitor display (11), a converter (12) for converting the signals from the PC (3) into video signals to be recorded, a first video deck (13) connected by means of a dedicated cable, and a second video deck (14) connected by means of a rank cable. The first video deck (13) is used to play back or reproduce the video images of the game that was recorded, while the second video deck 14 is used to record those video images from the first. video deck 13 combined with images (*e.g*., text, animation, symbology, data monitor displays) generated by the PC (3) in conjunction with the video images from the first video deck (13). In the general operation of this system, signals from the first video deck (13) that contains a videocassette of the recorded game are transmitted to both the PC (3) and the second video deck (14). As the PC (3) generates images to be superimposed or otherwise combined with the video images from the first video deck (13), the images from the PC (3) are first processed through the converter (12) and then recorded with the second.video deck (14) in combination with the video images from the first video deck (13). The PC (3) further outputs control signals to control the operation of the second video deck (14) and image signals to be displayed on the monitor display (11).

In order to replay specific events recorded during the game, from the initial menu screen of Fig. 2, the corresponding entry key for the event is activated. At that point, the PC (3) switches to the reproduction menu screen (15) as illustrated in Fig. 4, and the video images related to that event are displayed on the monitor display (11). For example, to observe the occurrence of a miss in passing, the corresponding entry key (111) is selected. The reproduction menu screen (15) is displayed on the display (4) of the PC (3) while the video images of the miss in passing are outputted to the monitor display (11).

In the reproduction menu screen (15), on the left half of the display, a panoramic ground (151) view of the playing field is displayed. The right half of the display includes a search key (152) for searching for the time leading to the event to viewed *(i.e., the* miss in passing), and a plurality of dedicated graphical interface operation keys for displaying information such as the name of a team (153), the name of the player(s) involved -in the event being viewed (*i.e*., the player who missed the passing of the ball) (154). The right half of the display also includes a window (155) which can be used to display alphanumeric or graphical data related to the event being viewed, for example, the circumstances leading to the miss in passing. Other dedicated graphical interface operation keys incorporated in the right half of the trisplay are those for accessing data and images of actions such as passes (156), dribbles (157), shots (158), in-goals (159) and no-goals (160) such that those actions may be graphically arranged and represented on the panoramic ground view (151), as will be further explained hereinbelow.

Based on the operation of the present invention as described above, information on the occurrence of certain events during the game (*i.e*., the miss in passing the ball) can be used to determine and analyze the cause for those events. However, other features of the present invention may be used to further analyze and illustrate those events, such as by graphically illustrating the actions and/or behavior of the players before and during the event.

As shown in Fig. 4, the reproduction menu screen (15) further includes dedicated graphical interface operation keys A - D that activate different modes in the reproduction menu screen (15). As illustrated, activation of the mode A operation key will access and display data on the game being viewed, including, for example, activation of the initial menu screen illustrated in Fig. 2.. Activation of the mode B operation key will access system information, including for example activation of other menu screens directed to the general operation of the PC (3).

When mode D is activated, data may be inputted into the system to analyze the game or events being viewed. In particular; in the panoramic ground view (151), the positions and actions of the players involved in the event may be graphically drawn or represented to further illustrate the circumstances that resulted in the event being viewed. For example, individual players represented by their jersey numbers may be illustrated as boxes other icons on the playing field. Different arrows or other graphical symbols may then be added to represent their actions, or the actions/movements of the ball during the event. Such different arrows or symbols are accessed through activation of the operation keys (156) to (160). For example, when the pass operation key (156) is activated to input the occurrence of a heading pass, an arrow with a solid line may then be drawn by the user between icons representing the players. Similarly, when the dribble operation key (157) is activated in the case of representing a dribbling pass, an arrow with a dotted line may be drawn by the user.

When the operation key for mode C is activated, the data inputted during mode D may be accessed and displayed on the reproduction menu screen (15). The actions of each player involved in the event being viewed may be graphically represented, whereby the flow and sequence of actions leading to the event being viewed may be displayed in the panoramic ground view (151) or in the window (155). In mode C, the operation keys (156) to (160) are used to access the data and graphical representations inputted during mode D. In addition, as is being done above for the actions and positions of players on one's own team in mode D as explained above, the formations, actions and/or positions of players on the opposing team may also be graphically inputted in mode D and then displayed in mode C.

For example, as graphically illustrated in Fig. 4, in mode C, when the pass operation key (156)is activated in conjunction with selecting the time when the ball being passed was missed, the reproduction menu screen (15) will display the graphical representations inputted as explained above, with players represented by icons 8, 9, 10 and 12.

In a typical application of the present invention, the system would be operated by a manager or a leader on the team concerned with the cause of certain events during a game, with how certain formations or actions are being executed, etc. The information provided by the present invention allows such a user to analyze the specific details that caused the events to occur or that result in certain formations of actions being successful or unsuccessful in actual use. The information may therefore be used to correct problems and deficiencies such that they may be avoided in future games.

As in the example of the miss in passing the ball, the user of the present invention may find that the formation used during the games was inferior to that of the opposing team, wherein that inferior formation allowed the presence of an opposing player that interfered with the passing between the players identified by icons 9 and 10. Accordingly, a user would use the present invention to understand, devise and illustrate the tactics necessary to counter the presence of an opposing player when that formation is used again.

While the present example has been described with respect to soccer, it is not limited thereto but also applicable to ball games such as American football, basketball, rugby, volleyball and the like as well as to even any other team sports wherein other types of balls besides those for the games mentioned above are employed, such as hockey and the like. The system of the present invention is applicable to such other sports in a manner similar to that set forth in the above-described example, wherein the software program of the present invention would be modified suitably for rules, offensive and defensive patterns for a specific game as would be understood by one of skill in the art. Further, the implementation of the present invention not otherwise disclosed and detailed above are consistent with implementations of software and graphical operations as known and understood in the art.

## Claims

1. A system for analyzing offensive and defensive patterns of teams in team sports, comprising:
means (7) for inputting data on offensive/defensive patterns to be analyzed, said offensive/defensive pattern data including data on individual player actions;
a plurality of dedicated entry keys (100) for entering predetermined types of data;
means (4) for displaying said offensive/defensive pattern data including at least means for displaying a graphical representation (9) of a playing field with said data on said individ ual player actions represented thereon;
wherein said display means (4) is operatively connected with said data inputting means (7) such that said display means (4) displays a plurality of said entry keys (100) for entering predetermined types of data, said data entry keys (100) being operatively connected to said data inputting means via said display means so as to input said offensive/defensive pattern data, and in conjunction with said display means (4) displaying entry of said data.
means (11, 13, 14) for recording and playing back video images of an actual game for analysis; and
means for synchronizing at least said playing back of said video images from said recording and playing back means (11, 13, 14) with said displaying of said offensive/defensive pattern data, whereby video images of said game are extracted and displayed in coordination with outputting and displaying of offensive/defensive pattern data selected for viewing.

2. The system according to claim 1, wherein said means (4) for displaying said offensive/defensive pattern data further includes means (8) for displaying data (117, 118) on at least one of a game start time (82), a game end time (83), a home team name (85), an opposing team name (85) and individual player names.

3. The system according to claim 1, wherein said means for displaying a graphical representation (9) of a playing field with said data (91, 92) on said individual players actions represented thereon is further for displaying said graphical representation with data on at least one of individual player positions and individual player identifications.

4. The system according to claim 1, wherein said means for displaying a graphical representation (9) of a playing field with said data (91, 92) on said individual player actions represented thereon is further for displaying said graphical representation with data on at least one of position and movement of a ball.

5. The system according to claim 1, wherein said means (11, 13, 14) for recording and playing back video images of an actual game for analysis includes a video camera (14) for recording video images of said game.

6. The system according to claim 1, wherein said synchronizing means is further for synchronizing at least said playing back of said video images with said graphical representation (9) of said playing field and said individual player action data (91, 92).

7. The system according to claim 1, wherein said synchronizing means includes a computer device having means for processing said offensive/defensive pattern data inputted via said data inputting means (7), and means for controlling operation of said display means (4) and said video image recording and playing back means (14, 13).

8. The system according to claim 7, wherein said means (14, 13) for recording and playing back video images of an actual game includes a video player device (13) and a video recorder device (14), said video player device (13) being operatively connected to output selected video image data to said computer device (3) and said video recorder device (14), and said computer device (3) being operatively connected to output display image data in conjunction with said selected video image data to said video recorder device (14) so as to record said display image data in synchronism with said selected video image data.

9. The system according to claim 8, wherein said computer device (3) includes a monitor display (11) for displaying at least one said selected video image data and said display image data, and a converter device (12) operatively connected between said computer device (3) and said video recorder device (14) for converting said display image data from said computer device (3) into video display image data to be recorded in said video recorder device (14).

10. A method for analyzing offensive and defensive patterns of a team in a team sport, said method comprising the steps of:
providing video images of an actual game to be analyzed;
providing a graphical representation (9) of offensive/defensive patterns to be analyzed in conjunction with said video images; and
synchronizing said graphical representation (9) with video images of said actual game, wherein said step of providing said graphical representation (9) includes the steps of inputting data on said offensive/defensive patterns, generating a graphical representation (9) of at least a playing field of said actual game, generating graphical representations of at least selected offensive/defensive patterns for displaying on said playing field representation (9) and
providing said graphical representation further includes providing a graphical data entry interface for inputting said offensive/defensive pattern data via a plurality of dedicated data entry keys (100) displayed with said graphical representation,
said step of synchronizing said graphical representation (9) with said video images includes synchronizing displaying of said playing field representation (9) and of said offensive/defensive patterns that are selected for viewing thereon with displaying of selected video images related to said selected offensive/defensive pattern representations, whereby said selected offensive/defensive pattern representations are viewed and analyzed in conjunction with said selected video images.

11. The method according to claim 10, wherein said step of synchronizing said graphical representation with said video images further includes synchronizing said inputting of data on said offensive/defensive patterns with said displaying of said selected video images.

12. The method according to claim 10, wherein said step of providing said graphical representation further includes the steps of inputting data on said individual player actions and generating graphical representations of at least selected individual player actions (91, 92) for displaying on said playing field representation (9).

13. The method according to claim 12, wherein said step of synchronizing said graphical representation with said video images further includes synchronizing said inputting of data for said selected individual player action representations (91, 92) that are selected for viewing thereon with displaying of selected video images related to said selected individual player action representations (91, 92), whereby said selected individual player action representations (91, 92) are viewed and analyzed in conjunction with said selected video images.

14. The method according to claim 10, wherein said step. of providing said graphical representation further includes the steps of inputting data on movements and positions of a ball and generating graphical representations of at least selected ball movements and positions for displaying on said playing field representation (9).

15. The method according to claim 14, wherein said step of synchronizing said graphical representation with said video images further includes synchronizing said inputting of data for said selected ball movement and position representations that are selected for viewing thereon with displaying of selected video images related to said selected ball movement and position representations.

## Patentansprüche

1. System zur Analyse von offensiven und defensiven Mustern von Mannschaften in Mannschaftssportarten, welche umfaßt:
Mittel (7) zur Dateneingabe von zu analysierenden offensiven/defensiven Mustern, die genannten offensiven/defensiven Musterdaten enthalten Daten über die Handlungen von einzelnen Spielern;
eine Vielzahl von unterschiedlichen Eingabetasten (100) zur Eingabe von vorbestimmten Datentypen;
Mittel (4) zur Wiedergabe der genannten Daten über die offensiven/defensiven Muster, die zumindest Mittel zur Wiedergabe einer graphischen Darstellung (9) von einem Spielfeld auf dem die genannten Daten der genannten Handlungen der einzelnen Spieler dargestellt werden umfaßt;
worin die genannten Wiedergabemittel (4) betrieblich mit den genannten Dateneingabemitteln (7) verbunden sind, so dass die genannten Wiedergabemittel (4) eine Vielzahl der genannten Eingabetasten (100) zur Eingabe von vorbestimmten Datentypen wiedergeben, die genannten Dateneingabetasten (100) über die genannten Wiedergabemittel betrieblich mit den genannten Eingabemitteln verbunden sind, um die genannten Daten der offensiven/defensiven Muster einzugeben, und in Verbindung mit den genannten Wiedergabemitteln (4) welche den Eingang der genannten Daten darstellen;
Mittel (11, 13, 14) zum Aufnehmen und zum Abspielen von Videobildern von einem aktuellen Spiel, um dieses zu analysieren; und
Mittel um wenigstens die Wiedergabe der genannten Videobilder von den genannten Aufnahme- und Wiedergabemitteln (11, 13, 14) mit der genannten Darstellung der genannten Daten über die offensiven/defensiven Muster zu synchronisieren, wobei die Videobilder des genannten Spiels extrahiert und dargestellt werden in Übereinstimmung mit der Ausgabe und der Darstellung der zur Ansicht ausgewählten Daten der offensiven/defensiven Muster.

2. System nach Anspruch 1, worin die genannten Mittel (4) zur Darstellung der genannten Daten über die offensiven/defensiven Muster weitere Mittel (8) zur Darstellung von Daten (117, 118) von wenigstens einer der Daten über eine Zeit zu der das Spiel beginnt (82) eine Zeit zu der das Spiel beendet ist (83), einem Namen der Heimmannschaft (85) einem Namen der gegnerischen Mannschaft (85) und die Namen der einzelnen Spieler umfaßt.

3. System nach Anspruch 1, worin die genannten Mittel zur Darstellung einer graphischen Darstellung (9) von einem Spielfeld mit den genannten Daten (91, 92) der darauf dargestellten Handlungen der einzelnen Spieler stellen im Weiteren eine graphische Darstellung mit den Daten von wenigstens der einzelnen Spielerposition oder einzelnen Spieleridentifikationen dar.

4. System nach Anspruch 1, worin die genannten Mittel zur Darstellung einer graphischen Darstellung (9) von einem Spielfeld mit den genannten Daten (91, 92) der einzelnen Handlungen der Spieler, die darauf abgebildet werden, im Weiteren der Darstellung der genannten graphischen Darstellung mit Daten von wenigstens einer der Daten von einer Position und einer Bewegung von einem Ball dient.

5. System nach Anspruch 1, worin die genannten Mittel (11, 13, 14) zur Aufnahme und zur Wiedergabe der Videobilder von einem aktuellen, zu analysierenden Spiel eine Videokammera (14) zur Aufnahme von Videobildern von dem genannten Spiel umfaßt.

6. System nach Anspruch 1, worin das genannten Synchronisierungsmittel im Weiteren zur Synchronisierung von wenigstens der genannten Wiedergabe der genannten Videobilder mit der genannten graphischen Darstellung (9) des genannten Spielfeldes und der genannten Daten (91, 92) der Handlungen der einzelnen Spieler dient.

7. System nach Anspruch 1, worin das genannte Synchronisierungsmittel ein Computergerät mit Mitteln zur Verarbeitung der über die genannten Dateneingabemittel (7) eingegebenen Daten der offensiven/defensiven Muster und Mitteln zur Steuerung des Betriebs der Darstellungsmittel (4) und der genannten Mittel (14, 13) zur Aufnahme und zur Wiedergabe der Videobilder umfaßt.

8. System nach Anspruch 7, worin die genannten Mittel (14, 13) zur Aufnahme und zur Wiedergabe von Videobildern eines aktuellen Spiels ein Gerät (13) zur Wiedergabe des Videos und ein Gerät (14) zur Aufnahme des Videos umfaßt, das genannte Gerät (13) zur Wiedergabe des Videos ist beim Betrieb so verbunden, dass es ausgewählte Daten von Videobildern an das genannte Computergerät (3) und das genannte Gerät (14) zur Aufnahme eines Videos ausgibt, und das genannte Computergerät (3) ist beim Betrieb so verbunden, um darzustellende Bilddaten in Verbindung mit den genannten ausgewählten Videobilddaten an das genannte Gerät (14) zur Aufnahme eines Videos auszugeben, um die genannten darzustellenden Bilddaten synchron mit den genannten ausgewählten Videobilddaten aufzunehmen.

9. System nach Anspruch 8, worin das genannte Computergerät (3) eine Monitoranzeige (11) zur Darstellung von wenigstens einem der genannten ausgewählten Videobilddaten und genannten Darstellungsbilddaten, und einem Konvertergerät (12), das im Betrieb zwischen dem genannten Computergerät (3) und dem genannten Gerät (14) zur Aufnahme eines Videos verschalten ist, um die genannten darzustellenden Bilddaten von dem genantnen Computergerät (3) in die von dem genannten Gerät (14) zum Aufnehmen eines Videos aufzunehmenden Video Darstellungsbilddaten zu konvertieren, umfaßt.

10. Verfahren zur Analyse von offensiven und defensiven Mustern einer Mannschaft in einer Mannschaftssportart, das genannte Verfahren umfaßt die Schritte:
Liefern von Videobildern von einem zu analysierenden aktuellen Spiel
Liefern einer graphischen Darstellung (9) von in Verbindung mit den genannten Videobildern zu analysierenden offensiven/defensiven Mustern und
die Synchronisierung der genannten graphischen Darstellung (9) mit den Videobildern des genannten aktuellen Spiels, worin der genannte Schritt des Lieferns der genannten graphischen Darstellung (9) die Schritte der Eingabe der Daten von den genannten offensiven/defensiven Mustern, die Erzeugung einer graphischen Darstellung (9) von wenigstens einem Spielfeld des genannten aktuellen Spiels, die Erzeugung von graphischen Darstellungen von wenigstens ausgewählten offensiven/defensiven Mustern zur Darstellung auf der genannten Spielfelddarstellung (9) umfaßt, und wobei
das Bereitstellen der genannten graphischen Darstellung weiter das Bereitstellen einer graphischen Dateneingabeschnittstelle zur Eingabe der genannten Daten der offensiven/defensiven Muster über eine Vielzahl von unterschiedlichen Dateneingabelasten (100) umfasst, die auf der genannten graphischen Darstellung dargestellt werden,
der genannte Schritt der Synchronisierung der genannten graphischen Darstellung (9) mit den genannten Videobildern die synchronisierte Darstellung der zur Ansicht ausgewählten genannten Darstellung des Spielfeldes (9) und der genannten offensiven/defensiven Muster mit der Darstellung der ausgewählten Videobilder bezüglich der genannten ausgewählten Darstellungen der offensiven/defensiven Muster umfaßt, wobei die genannten ausgewählten Darstellungen der offensiven/defensiven Muster betrachtet und analysiert werden in Verbindung mit den genannten ausgewählten Videobildern.

11. Verfahren nach Anspruch 10, worin der genannte Schritt der Synchronisierung der genannten graphischen Darstellung mit den genannten Videobildern des Weiteren die Synchronisierung der genannten Eingabe der Daten der offensiven/defensiven Muster mit der genannten Darstellung der genannten ausgewählten Videobilder umfaßt.

12. Verfahren nach Anspruch 10, worin der genannte Schritt des Bereitstellens der genannten graphischen Darstellung des Weiteren die Schritte der Dateneingabe für die einzelnen Handlungen der Spieler und das Erzeugen der graphischen Darstellung von wenigstens ausgewählten einzelnen Handlungen der Spieler (91, 92) zur Darstellung auf der genannten Darstellung des Spielfeldes (9) umfaßt.

13. Verfahren nach Anspruch 12, worin der genannte Schritt der Synchronisierung der genannten graphischen Darstellung mit den genannten Videobildern des Weiteren die Synchronisierung der genannten Dateneingabe für die genannten ausgewählten einzelnen Darstellungen der Spielerhandlungen (91, 92), die zur Ansicht ausgewählt wurden, mit der Darstellung von ausgewählten Videobildem bezüglich der genannten ausgewählten Darstellungen der einzelnen Spielerhandlungen (91, 92), wobei die genannten ausgewählten Darstellungen der einzelnen Spielerhandlungen (91, 92) betrachtet und analysiert werden in Verbindung mit den genannten ausgewählten Videobildern.

14. Verfahren nach Anspruch 10, worin der genannte Schritt der genannten graphischen Darstellung des Weiteren die Schritte der Dateneingabe der Bewegungen und Positionen des Balles und die Erzeugung der graphischen Darstellungen von wenigstens ausgewählten Ballbewegungen und Positionen zur Darstellung auf der genannten Darstellung des Spielfeldes (9) umfaßt.

15. Verfahren nach Anspruch 14, worin der genannte Schritt der Synchronisierung der genannten graphischen Darstellung mit den genannten Videobildern des Weiteren die Synchronisierung der Dateneingabe für die genannten ausgewählten Darstellungen der Ballbewegung und - Position, die zur Ansicht ausgewählt wurden, mit der Darstellung der ausgewählten Videobilder bezüglich der genannten ausgewählten Darstellungen der Ballbewegung.

## Revendications

1. Un système destiné analyser des schémas offensifs et défensifs d'équipes de sports d'équipes , comprenant :
- des moyens (7) pour rentrer des données dans des schémas offensifs / défensifs destinées à être analysées ; ledit schéma de données offensif / défensif comprenant des données sur les actions individuelles de joueurs ;
- une pluralité de clés d'entrée dédiées (100) et destinées à rentrer des types de données prédéterminés ;
- des moyens (4) pour afficher des données de schémas offensifs / défensifs comportant au moins des moyens pour afficher une représentation graphique (9) d'un terrain de jeu par l'intermédiaire desdites données sur lesdites actions individuelles des joueurs représentées ;
- lesdits moyens d'affichage (4) étant fonctionnellement connectés audits moyens d'entrée de données de manière à ce que ledit moyen d'affichage (4) affiche une pluralité desdites clés d'entrée (100) pour rentrer des types de données prédéterminées ; lesdites clés d'entrée de données (100) sont fonctionnellement connectées audits moyens d'entrée de données par l'intermédiaire desdits moyens d'affichage de manière à rentrer lesdites données de schéma offensif / défensif et d'afficher en conjonction avec lesdits moyens d'affichage (4) l'entrée desdites données.
- des moyens (11, 13, 14) pour enregistrer et lire des images vidéo d'un jeu actuel pour l'analyser, et
- des moyens pour synchroniser, au moins, ladite lecture desdites images vidéo à partir desdits moyens d'enregistrement et de lecture (11, 13, 14) grâce audit affichage desdites données de schéma offensif / défensif; lesdites images vidéo dudit jeu étant extraites et affichées en coordination avec la sortie et l'affichage des données de schéma offensif / défensif sélectionnées pour être vues.

2. Le système selon la revendication 1, dans lequel lesdits moyens (4) pour afficher lesdites données des schémas offensifs / défensifs comportent, en outre, des moyens (8) pour afficher des données (117, 118) sur, au moins, un temps de début de jeu (82), un temps de fin de jeu (83), un nom d'équipe recevant (85), un nom d'équipe visiteur (85) et des noms de joueurs individuels.

3. Le système selon la revendication 1, dans lequel lesdits moyens pour afficher une représentation graphique (9) d'un terrain de jeu avec lesdites données (91, 92) sur lesdites actions des joueurs individuels représentées servent également à afficher ladite représentation graphique avec les données sur, au moins, une des positions de joueurs individuels et des identifications de joueurs individuels.

4. Le système selon la revendication 1, dans lequel lesdits moyens pour afficher une représentation graphique (9) d'un terrain de jeu avec lesdites données (91, 92) sur lesdites actions des joueurs individuels représentées servent également à afficher ladite représentation graphique avec les données sur, au moins, une position et le déplacement d'une balle.

5. Le système selon la revendication 1, dans lequel lesdits moyens (11, 13, 14) pour enregistrer et lire des images vidéo d'un jeu actuel destiné à être analysé comporte une caméra vidéo (14) pour enregistrer les images vidéo dudit jeu.

6. Le système selon la revendication 1, dans lequel ledit moyen de synchronisation sert également à synchroniser, au moins, ladite lecture desdites images vidéo avec ladite représentation graphique (9) dudit terrain de jeu et lesdites données (91, 92) des actions de joueurs individuels .

7. Le système selon la revendication 1, dans lequel ledit moyen de synchronisation comporte un dispositif informatique ayant des moyens pour traiter lesdites données de schéma offensif / défensif rentrées par l'intermédiaire desdits moyens d'entrée de données (7), et des moyens pour contrôler le fonctionnement desdits moyens d'affichage (4) et lesdits moyens (14, 13) d'enregistrement et lecture d'images vidéo.

8. Le système selon la revendication 7, dans lequel lesdits moyens (14, 13) d'enregistrement et de lecture d'images vidéo d'un jeu actuel, comportent un dispositif de lecture vidéo (13) et un dispositif d'enregistrement vidéo (14) ; ledit dispositif de lecture vidéo (13) étant connecté fonctionnellement de manière à sortir des données d'images vidéo sélectionnées vers ledit dispositif informatique (3), et ledit dispositif d'enregistrement vidéo (14), aussi que ledit dispositif informatique (3) étant connecté de manière à sortir des données de lecture d'images en conjonction avec lesdites données d'images vidéo sélectionnées vers ledit dispositif d'enregistrement vidéo (14) de manière à enregistrer lesdites données de lecture d'images en synchronisation avec lesdites données d'images vidéo sélectionnées.

9. Le système selon la revendication 8, dans lequel ledit dispositif informatique (3) comporte un affichage de moniteur (11) pour afficher, au moins, une desdites données d'images vidéo et desdites données d'images affichées et comporte un dispositif convertisseur (14) destiné à convertir lesdites données d'images affichées en provenance dudit dispositif informatique (3) en données d'images vidéo destinées à être enregistrées dans ledit dispositif d'enregistrement vidéo (14).

10. Un procédé pour analyser des schémas offensifs et défensifs d'équipes de sports d'équipes, ledit procédé comprenant les étapes suivantes :
- la fourniture des images vidéo d'un jeu actuel destinées à être analysées ;
- la fourniture d'une représentation graphique (9) de schémas offensifs / défensifs, destinée à être analysée en conjonction avec lesdites images vidéo ; et
- la synchronisation de ladite représentation graphique (9) avec les images vidéo dudit jeu actuel, où ladite étape pour fournir ladite représentation graphique (9) comporte des étapes pour rentrer des données dans lesdits schémas offensifs / défensifs , pour générer une représentation graphique (9) d'au moins un terrain de jeu dudit jeu actuel, pour générer des représentations graphiques de schémas offensifs / défensifs sélectionnés, pour un affichage sur ladite représentation de terrain de jeu (9) et,
- la fourniture d'une telle représentation graphique comporte, en outre, la fourniture d'une interface d'entrée de données graphiques destinée à rentrer lesdites données de schéma offensif / défensif par l'intermédiaire de clés dédiées d'entrée de données (100) affichées au moyen de ladite représentation graphique,
- ladite étape de synchronisation de ladite représentation graphique (9) avec lesdites images vidéo comporte un affichage synchronisé de ladite représentation (9) de terrain de jeu et desdits schémas offensifs / défensifs qui ont été sélectionnés pour montrer sur la représentation un affichage des images sélectionnées, liées aux représentations sélectionnées de schéma offensif / défensif; lesdites représentations sélectionnées de schéma offensif / défensif étant visionnées et analysées en même temps que les images vidéo sélectionnées.

11. Le procédé selon la revendication 10, dans lequel ladite étape de synchronisation de ladite représentation graphique avec lesdites images vidéo comporte, en outre, une synchronisation d'entrée de données dans lesdits schémas offensifs / défensifs avec ledit affichage desdites images vidéo sélectionnées.

12. Le procédé selon la revendication 10, dans lequel ladite étape de fourniture de ladite représentation graphique comporte, en outre, les étapes d'entrée de données dans lesdites actions de joueurs individuels et la génération de représentations graphiques d'actions sélectionnées de joueurs individuels (91, 92) pour les afficher sur ladite représentation (9) de terrain de jeu.

13. Le procédé selon la revendication 12, dans lequel l'étape de synchronisation de ladite représentation graphique avec lesdites images vidéo comprend, en outre, une synchronisation de ladite entrée de donnée pour lesdites représentations (91, 92) des actions sélectionnées de joueurs individuels choisies pour être visionnées avec un affichage d'images vidéo sélectionnées en liaison avec lesdites représentations (91, 92) d'actions sélectionnées de joueurs individuels ; lesdites représentations d'actions sélectionnées de joueurs individuels étant visionnées et analysées en conjonction avec les images vidéo sélectionnées.

14. Le procédé selon la revendication 10, dans lequel ladite étape de fourniture de ladite représentation graphique comporte, en outre, les étapes pour rentrer des données sur les mouvements et les positions d'une balle et pour générer des représentations graphiques d'au moins les mouvements et positions sélectionnés d'une balle pour les afficher dans ladite représentation de terrain de jeu (9).

15. Le procédé selon la revendication 14, dans lequel ladite étape de synchronisation de ladite représentation graphique avec lesdites images vidéo comprend, en outre, ladite entrée de données pour lesdites représentations de mouvement et de position de balle sélectionnées qui ont été choisies pour être visionnées avec l'affichage d'images vidéo sélectionnées en liaison avec lesdites représentations de mouvement et de position de balle.
